# EUROPEAN PATENT APPLICATION

(11) **EP 4 361 981 A1**
(43) Date of publication of application: **01.05.2024**
(21) Application number: 23202294.7
(22) Date of filing: 09.10.2023
(51) Int. Cl.: G07F 11/24, G07F 11/44, G07F 11/52, G07F 17/00

(54) **METERED FOOD DISPENSER WITH ACCURACY PULSING FOR IMPROVED DISPENSING ACCURACY**

(30) Priority: 31.10.2022 US 202263420783 P
(71) Applicant: Franke Technology and Trademark Ltd, 6052 Hergiswil (CH)
(72) Inventor: Chmayssani, Khalil, Nolensville 37135 (US); Fernandez, Omar, Mt. Juliet 37122 (US)
(74) Representative: LBP Lemcke, Brommer & Partner Patentanwälte mbB

(57) **Abstract**

A product dispenser, preferably for frozen food product, having a storage hopper, a rotatable drum having paddles on a periphery thereof located at a bottom of the storage hopper, and a drive motor connected to the rotatable drum. Rotation of the drum causes the product to be delivered to a weighing/dispensing assembly having a load cell and one or more dump doors on which product to be dispensed is adapted to accumulate. A controller receives a signal from the load cell and determine a weight of the product accumulating on the one or more dump doors, and upon a product weight target preset value being reached, starts a pulsing algorithm to achieve the desired weight of the accumulated product prior to dispensing.

## Description

### CROSS-REFERENCE TO RELATED APPLICATIONS

This application claims the benefit of U.S. Provisional Application No. 63/420,783, filed October 31, 2022, which is incorporated herein by reference as if fully set forth.

### TECHNICAL FIELD

The present invention relates to the field of metered food dispensers that dispense a metered quantity of food product from a hopper. More particularly, the invention relates to a dispenser for frozen food, which can be, for example, French fries, that are dispensed from a bulk storage hopper in metered batch sizes to a fry basket.

### BACKGROUND

Applicant has developed and markets metered food dispensers, particularly for frozen foods such as French fries or chicken nuggets, that dispense bulk food product from a storage hopper into a receptacle, such as a fry basket. The frozen food is dispensed in specific metered quantities as the amount of the frozen food that is dispensed at one time can affect quality of the finished (cooked) food product, for example, based on the temperature change imparted by the food product to the cooking oil as well as the necessary fry time in the cooking oil. Currently, the frozen food product is removed from a bottom of the storage hopper via a rotating drum having paddles or fins on a periphery thereof by rotating the drum so that the food product that is released/displaced by the paddles fall onto a weighing/dispensing assembly. When the appropriate weight of food product is detected by the weighing/dispensing assembly, the rotation of the drum stops, and the accumulated food product that was dispensed onto the weighing/dispensing assembly is delivered to the receptacle, for example, the fry basket, by opening one or more dump doors on which the product accumulates.

In the known equipment, the drum rotates at a constant speed in one direction during each dispensing operation and, in particular for frozen French fries, stops when the amount of the food product is within 10% of the desired target weight. However, for products other than French fries where the accuracy of reaching the target weight is more critical, significantly higher accuracy is required for the amount of product that is dispensed.

Although the known arrangement has been very successful in operation, it would be desirable to maintain or improve the function and reliability of the system for higher accuracy dispensing.

### SUMMARY

The present disclosure is directed to a product dispenser, preferably for frozen food product, having a storage hopper, a rotatable drum having paddles on a periphery thereof located at a bottom of the storage hopper, and a drive motor connected to the rotatable drum. Rotation of the drum causes the paddles to engage with and move product from the open bottom of the hopper to a position in the drum housing where the product can then fall through the open bottom of the drum housing. A weighing/dispensing assembly is located beneath the rotatable drum and includes a load cell and further includes or is connected to one or more dump doors on which product to be dispensed is adapted to accumulate. A controller is provided and is configured to: a) actuate the drive motor to rotate the rotatable drum at a start of a dispensing cycle, b) receive a signal from the load cell and determine a weight of the product accumulating on the one or more dump doors, c) determine if a percentage of a product weight target preset value is reached for the product accumulating on the dump doors, d) upon the product weight target preset value being reached, start a pulsing algorithm including sending alternating run and pause signals to the drive motor, e) determine if a target weight is reached based on the signal from the load cell of the weight of the product accumulating on the one or more dump doors, f) deactivate the drive motor upon the target weight being detected, and g) open the one or more dump doors such that accumulated product is dispensed.

Using the pulsing algorithm at the end of the at the end of the dispensing cycle for discharging product from the hopper via the rotating drum to the weighing/dispensing assembly allows for higher accuracy to be achieved in reaching the target weight. The frequency of the pulsing can be adapted to the specific shape and density of the product being dispensed. This also allows for accelerated dispensing in a dispensing cycle prior to the product weight target preset value being reached, which can decrease overall dispensing time.

In one preferred embodiment, the controller is optionally further configured to detect a total dispense time from the start of the dispensing cycle, and is further configured to signal a display if a dispense total time preset value is exceeded.

In one preferred embodiment, the controller is optionally further configured to continue the pulsing algorithm including sending alternating run and pause signals to the drive motor if the target weight is not reached and the total dispense time is not exceeded.

In one preferred embodiment, the product dispenser includes a housing and a refrigeration unit for cooling an interior space of the housing, and the hopper and the rotatable drum are located in the housing.

This is particularly preferred for the product dispenser being a frozen food dispenser which can accurately meter out portions of frozen foods, such as French fries or chicken nuggets, to be dispensed.

In a particularly preferred embodiment, there are two of the storage hoppers, two of the rotatable drums with respective ones of the drive motors, and two of the weighing/dispensing assemblies, with one of the weighing/dispensing assemblies being located beneath each respective one of the rotatable drums, forming two dispensing arrangements, and the controller is configured to control the dispensing of product from each of the storage hoppers for each dispensing arrangement.

In one preferred embodiment, a receptacle sensor configured to detect a receptacle being placed into a receiving position under the one or more dump doors is provided, and the receptacle sensor signals the controller which is configured to initiate the dispensing cycle upon the receptacle being detected. Alternatively, a user switch or push-button could be used to initiate a dispensing cycle.

Using the present arrangement allows dispensing of product with high accuracy target weights being achieved, preferably within 5% and more preferably within 2% or less of the desired target weight in a rapid manner, preferably within 15 seconds, and more preferably within 10 seconds . This rapid and accurate dispensing of metered amounts of product is particularly useful for frozen food products, such as French fries or chicken nuggets, which are to be cooked in a restaurant environment. The system also allows for flexibility in accurate, higher-speed dispensing of other products based on their shape and density since the pulsing frequency and duration can be varied based on the particular product and application.

The various features noted above can be used alone or in various combination to provide for metered dispensing of products, and in particular frozen food products, in an accurate manner.

### BRIEF DESCRIPTION OF THE DRAWINGS

Further advantages and characteristics of the invention will become apparent by the below description of embodiments making reference to the accompanying drawings, in which:
Figure 1 is a perspective view of a prior art product dispenser of the assignee of the general type referenced herein.
Figure 2 is a partial perspective view of the prior art product dispenser shown in Figure 1 illustrating two food storage hoppers with an arrow indicating where food is filed into the first hopper.
Figure 3 is a partial perspective view of the prior art product dispenser according to Figure 1 in which the two food hoppers shown in Figures 1 and 2 have been removed in order to provide a view of the rotatable drums with paddles or fins as well as associated drive motors that are individually activatable to rotate the drum associated with a specific hopper in order to remove food product from the open bottom end of the hopper and deliver the food product via an opening at the bottom of the drum housing to a respective weighing/dispensing assembly.
Figure 4 is an exploded assembly view in perspective showing a portion of one weighing/dispensing assembly in accordance with the prior art product dispenser shown in Figures 1-3 showing a dump door motor and gear box assembly used to actuate the dump doors, as well as a support assembly lift motor and gear box assembly used to lift a support assembly into and out of contact with a load cell, with the motor and gearbox assemblies being assembled to a mounting plate and/or a movable support assembly located thereon.
Figure 5 is a an exploded similar to Figure 4 in which additional components, including the rotatable shafts with associated dump doors as well as the levers and linkages that are acted upon by the dump door motor and gear box to discharge product from the dump doors are now shown.
Figure 6 is a schematic diagram showing a product dispenser in accordance with the present invention.
Figure 7 is a flow diagram showing exemplary controller logic for the controller used in the product dispenser shown in Figure 6.

### DETAILED DESCRIPTION

Certain terminology is used in the following description for convenience only and is not limiting. The words "right," "left," "top," and "bottom" designate directions in the drawings to which reference is made. The words "a" and "one," as used in the claims and in the corresponding portions of the specification, are defined as including one or more of the referenced item unless specifically stated otherwise. This terminology includes the words above specifically mentioned, derivatives thereof, and words of similar import. The phrase "at least one" followed by a list of two or more items, such as "A, B, or C," means any individual one of A, B or C as well as any combination thereof. The terms approximately or generally mean within +/-10% of a specified value unless otherwise noted, and within +/- 25° of a specified angle or direction.

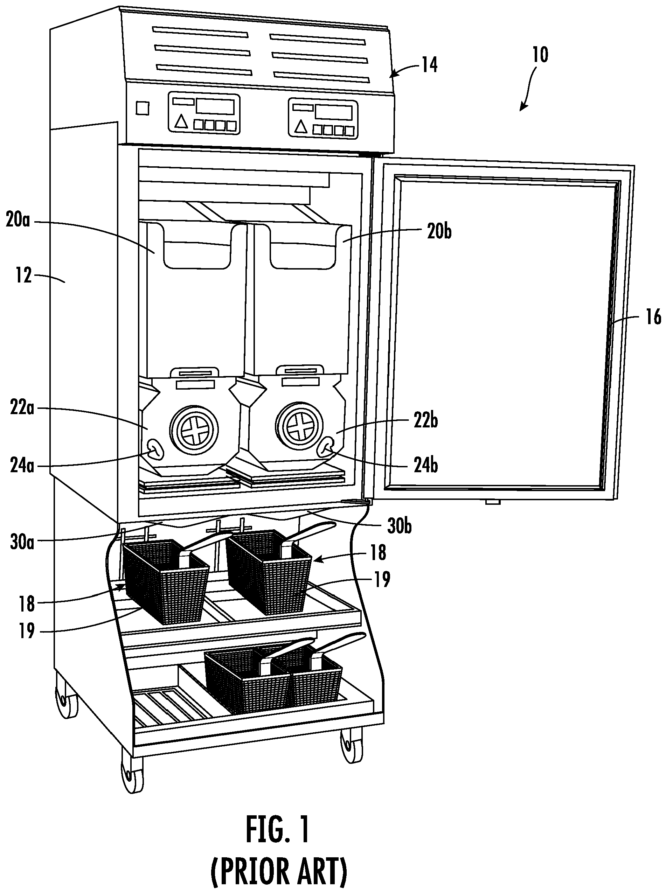

Referring to Figures 1-5, a prior art product dispenser 10, in particular a dispenser for frozen food such as french fries or chicken nuggets, is shown. The product dispenser 10 includes a housing 12 with a refrigeration unit 14 located on top of the housing 12 as well as an access door 16 to the refrigerated portion of the product dispenser 10. Product receiving spaces 18 are located beneath the enclosed area and are configured to receive a receptacle, such as a fry basket 19, into which a metered amount of product is to be dispensed.

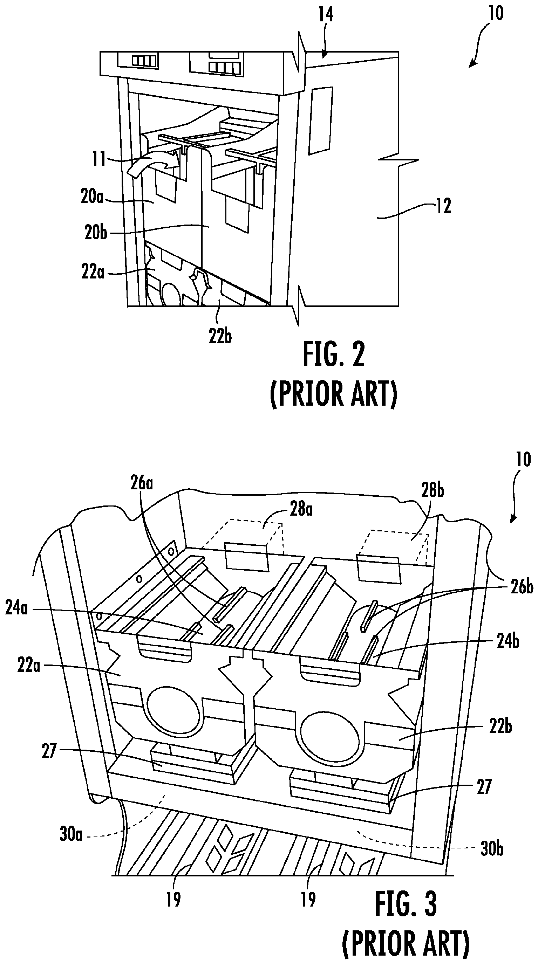

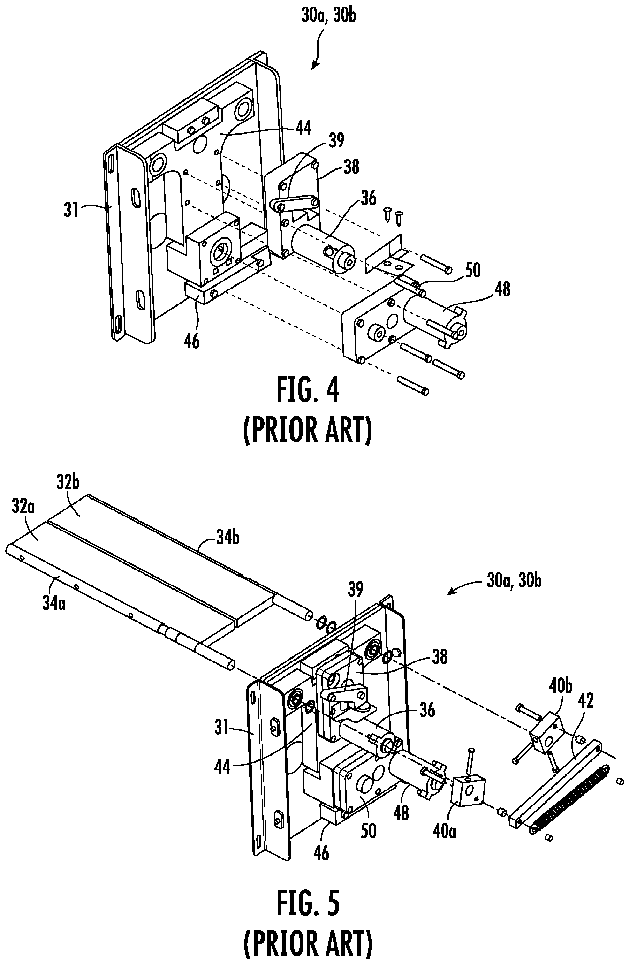

Still with reference to Figures 1-3, hoppers 20a, 20b are located within the refrigerated area and are assembled on top of drum housings 22a, 22b. Frozen food product (indicated by arrow 11 in Fig. 2) can be loaded into the hoppers 20a, 20b for metered dispensing. As shown in detail in Figure 3, rotatable drums 24a, 24b are located within the respective drum housings 22a, 22b. Flexible paddles or fins (these terms are used interchangeably herein) 26a, 26b are located on the rotatable drums 24a, 24b. Drive motors 28a, 28b, shown schematically, are individually activatable to rotate the respective associated rotatable drum 24a, 24b in order to move product from the open bottom end of the desired associated hopper 20a, 20b into the respective drum housings 22a, 22b so that the product can drop down on to the respective weighing/dispensing assembly 30a, 30b. These are indicated in their respective positions in Figures 1 and 3, and an exemplary arrangement is shown in detail in Figures 4 and 5. Boots 27 shown in Fig. 3 guide the food product 11 from the open bottom of the drum housings 22a, 22b to the weighing/dispensing assemblies 30a, 30b.

As shown in Figs. 4 and 5, the weighing/dispensing assemblies 30a, 30b may each include a mounting plate 31 that is connected to the housing 12. A support assembly 44 is slidably connected to the mounting plate 31 for up and down movement. Rotatable shafts 34a, 34b are rotatably supported in the support assembly 44 and respective dump doors 32a, 32b are connected to the respective rotatable shafts 34a, 34b. A dump motor 36 is mounted on the support assembly 44 and includes a dump motor gear box 38 that is connected to an actuator arm 39 that, upon activation of the dump door motor 36, is rotated into contact with a first dump door drive lever 40a, which can be connected via a linkage arm 42 to a second dump door drive lever 40b in order to activate and open the dump doors 32a, 32b. This is done when a specific product weight is accumulated on the dump doors 32a, 32b based on rotation of an associated one of the rotatable drums 24a, 24b moving product from the bottom of a respective one of the hoppers 28a, 28b so it falls through the respective drum housing 22a, 22b, onto the respective closed dump doors 32a, 32b.

In order to detect the weight of the product accumulated on the dump doors 32a, 32b, a load cell 46 is provided and is in contact with the support assembly 44 as the food product is accumulated on the dump doors 32a, 32b while the rotatable drum 24a or 24b is rotated by the respective drive motor 28a or 28b. Once the load cell 46 detects that the desired amount of food product is located on the dump doors 32a, 32b, rotation of the rotatable drum 24a or 24b is stopped and the dump door motor 36 is activated in order to open the dump doors 32a, 32b. In order to move the support assembly 44 out of contact with the load cell 46, a support assembly lift motor 48 is provided and is connected to a support assembly lift gear box 50. The support assembly lift motor 48 is activated in order to raise the support assembly 44 out of contact with the load cell 46 when the dispensing cycle is completed so that the load cell 46 is not loaded until a next dispensing cycle is initiated and the support assembly lift motor is activated to move the support assembly 44 into contact with the load cell 46.

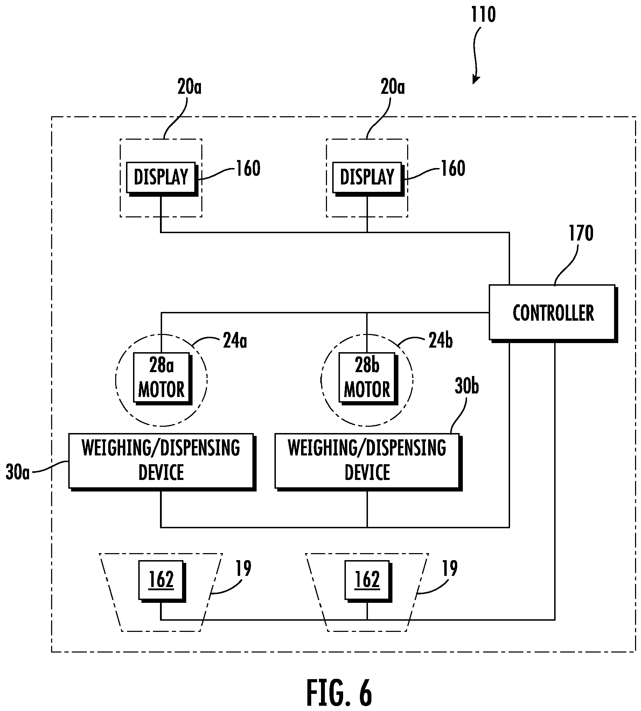

Referring to Figures 6-7, a product dispenser 110 in accordance with the present disclosure having the improved features discussed herein is described in detail. The product dispenser 110 is similar to the product dispenser 10 and includes the housing 12, refrigeration unit 14 as well as the access door 16 and fry basket receiving spaces 18 in which fry baskets or other receptacles 19 for dispensed product can be positioned, as described above. Additionally, the hoppers 20a, 20b as well as the drum housings 22a, 22b and rotatable drums 24a, 24b are provided as described above in connection with the product dispenser 10. Drive motors 28a, 28b as described above for driving the rotatable drums 24a, 24b are also provided and are used to drive the respective rotatable drums 24a, 24b to engage with and move food product from the open bottom of a respective hopper 20a or 20b to a position in the drum housing 22a, 22b where the food product can then fall through the open bottom of the drum housing 22a, 22b. Additionally, weighing/dispensing assemblies 30a, 30b are used as described above to receive and weigh the product to be dispensed. Other types of weighing/dispensing assemblies could be utilized that include at least a load cell to determine a weight of product being accumulated prior to being dispensed, and a dispensing mechanism which can include, for example, one or more dump doors, a tilt tray, a sweep arm or any other means for moving product off of the weighing assembly and into the receptacle for the dispensed product. While the product dispenser 110 is also described with two dispensing arrangements similar to that shown in Figure 1, it could also be a dispensing arrangement (one hopper, one rotatable drum, and one weighing/dispensing mechanism) or include more than two dispensing arrangements.

As shown schematically in Figure 6, the product dispenser 110 includes a controller 170, preferably including a processor and memory, that is programmed and configured to: a) actuate the drive motor 28a or 29b to rotate the rotatable drum 24a or 24b at a start of a dispensing cycle, b) receive a signal from the load cell 46 and determine a weight of the product accumulating on the one or more dump doors 32a, 32b, c) determine if a percentage of a product weight target preset value is reached for the product accumulating on the dump doors 32a, 32b, d) upon the product weight target preset value being reached, starting a pulsing algorithm including sending alternating run and pause signals to the drive motor 28a or 28b, e) determine if a target weight is reached based on the signal from the load cell 46 of the weight of the product accumulating on the one or more dump doors 32a, 32b, f) deactivate the drive motor 28a or 28b upon the target weight being detected, and g) open the one or more dump doors 32a, 32b such that the accumulated product is dispensed.

In one preferred embodiment where the food product being dispensed is French fries, the product weight target present value can become for example, 80% of the target weight of 32 ounces, and the pulsing algorithm can include, for example, an alternating run time of 150 ms for the drive motor 28a or 28b and an off time of 150 ms for the drive motor28a, 28b. This provides a pulsing that is equivalent to about 50% of the rated speed of the motor 28a or 28b and allows for more accuracy in achieving the target product weight for the dispensed product on the one or more dump doors 32a, 32b prior to deactivating the drive motor 28a or 28b. Achieving the target weight is understood as being within a certain tolerance of the preset target weight, and is preferably within 5% and more preferably within 2%. In this example, the product weight target preset value is noted as 80% of the actual target weight. However, this could be varied, and it could be 85% or 90%.

For other products, for example such as frozen chicken nuggets, the pulsing algorithm can include, for example, an alternating 200 ms run time and a 100 ms off time. For other products, this algorithm can be varied depending upon the product density and configuration.

Using this algorithm by programming it into the controller 170, it is possible to run the drive motor 28a or 28b at full speed up until the product weight target preset value is reached at which point the pulsing algorithm is engaged in order to provide higher accuracy at meeting the target weight of dispensed product onto the dump doors 32a, 32b. Preferably, this can be achieved within 5% and more preferably within 2% of the desired target weight in a rapid manner. Depending on the particular application, this could optimally be within 1%.

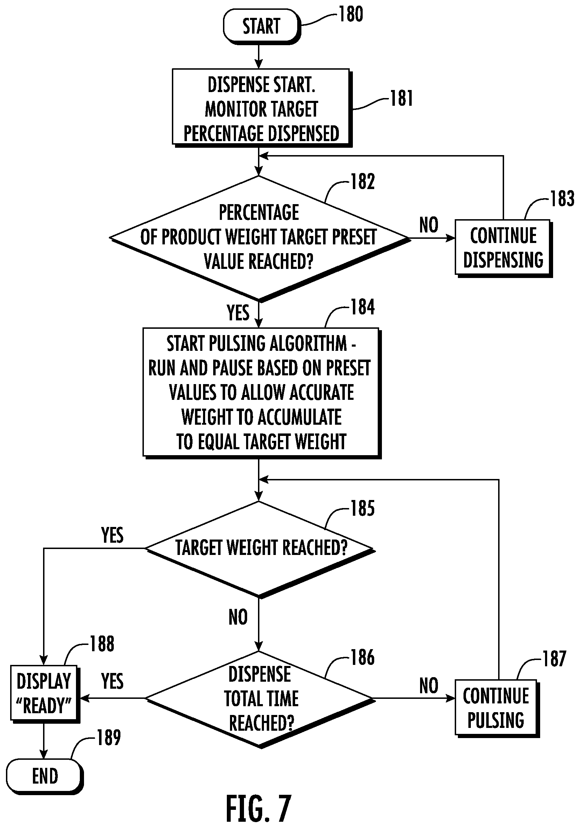

In another aspect, the controller 170 is further configured to detect a total dispense time, which is indicated at 186 in the controller logic diagram provided in Figure 7. Here, the controller 170 can be further configured to signal a display 160 if a dispensed total time preset value is exceeded. This can be, for example, 15 seconds from a start of a dispensing cycle. If this time is exceeded, this may indicate that product may have bridged or jammed at the storage hopper dispensing opening above the rotatable drum 24a, 24b or could also indicate that the storage hopper is empty.

In a further aspect, the controller 170 can be configured to continue the pulsing algorithm, including sending alternating run and pause signals to the drive motor 28a or 28b, if the target weight is not reached and the total dispense time is not exceeded. This is illustrated, for example at 185, 186 and 187 of the logic flow diagram for the controller 170 shown in Figure 7.

In a preferred arrangement, the product dispenser 110 includes a housing 12, similar to that discussed above, as well as a refrigeration unit 14 for cooling an interior space of the housing 12, and the hopper 20a, 20b as well as the rotatable drums 24a, 24b is located in the housing 12. This is particularly useful for dispensing frozen food products where the product dispenser 110 is a frozen food dispenser.

In a preferred embodiment as illustrated schematically in Figure 6, there are two of the storage hoppers 20a, 20b as well as two of the rotatable drums 24a, 24b with respective ones of the drive motors 28a, 28b as well as two of the weighing/dispensing assemblies 30a, 30b with one of the weighing/dispensing assemblies 30a, 30b being located beneath respective one of the rotatable drums 24a, 24b. Here, the controller 170 is configured to independently control the dispensing of product from each of the storage hoppers 20a, 20b.

Further, as shown in Figure 6, preferably a receptacle sensor 162 that is configured to detect a receptacle 19 being placed into a receiving space 18 under the one or more dump doors 32a, 32b is provided. The receptacle sensor 162 signals the controller 170 which is configured to initiate the dispensing cycle upon the receptacle 19 being detected. The sensor 162 can be, for example, a proximity sensor, break beam sensor, or any other suitable type of sensor that detects the presence of a receptacle in a specific area beneath the one or more dump doors 32a, 32b for each dispensing arrangement.

Referring to Figure 7, an exemplary logic flow for the controller 170 is shown in connection with dispensing from one storage hopper 20a of one dispensing arrangement. The controller 170 can also have multiple algorithms associated with different ones of the storage hoppers 20a, 20b of different dispensing arrangements to the extent that different product is being dispensed and different pulsing algorithms are utilized.

As shown in Figure 7, the controller 170 starts a dispensing cycle, as indicated at 180, which can be done via a signal from a receptacle sensor 162, or can be manually activated, for example by a start button being pressed by a user. This includes activating the drive motor 28a or 28b to rotate the rotatable drum 24a or 24b. As shown at 181, once the dispensing cycle has initiated, the controller 170 monitors the target percentage dispensed based on signals received from the load cell 46 in order to determine whether a product weight target preset value has been reached.

As indicated at 182, when the percentage of product weight target preset value is reached, for example upon reaching 80% of a target dispensing weight for a particular product, the pulsing algorithm is started as indicated at 184. In the event that the percentage of product weight target preset value is not reached, dispensing continues as indicated at 183.

Once the pulsing algorithm is initiated at 184, the controller 170 continues the run and pause cycle based on the preset values for the product specific algorithm in order to allow an accurate weight to accumulate such that the product weight equals the target weight within a specific margin, for example 5% of the target weight, and more specifically, 2% of the target weight. Once the target weight is reached, as indicated at 185, the controller 170 signals the display 160 that the dispensed product is "ready" and deactivates the drive motor 28a or 28b so that no additional product is removed from the hopper 20a or 20b.

If the target weight is not reached as indicated at 185, the controller 170 continues the pulsing algorithm to the drive motor 28a or 28b as indicated at 187. Optionally, as indicated at 186, the controller 170 can also determine whether or not a dispense total time has been reached and if in fact this has been reached, the controller 170 deactivates the drive motor 28a or 28b and discontinues the pulsing cycle and also signals the display 160. To the extent that the total time has not been reached, the controller 170 continues the pulsing algorithm signal to the drive motor 28a or 28b as indicated at 187 until the target weight is reached or the total time is reached as indicated at 185 and 186. Once the dispensing cycle is completed as indicated at 189, the product on the weighing/dispensing mechanism 30a or 30b is dropped and/or released into the receptacle 19 and the dispensing program ends.

It will be appreciated that the foregoing is presented by way of illustration only and not by way of any limitation. It is contemplated that various alternatives and modifications may be made to the described embodiments without departing from the spirit and scope of the invention. Having thus described the present invention in detail, it is to be appreciated and will be apparent to those skilled in the art that many physical changes, only a few of which are exemplified in the detailed description of the invention, could be made without altering the inventive concepts and principles embodied therein. It is also to be appreciated that numerous embodiments incorporating only part of the preferred embodiment are possible which do not alter, with respect to those parts, the inventive concepts and principles embodied therein. The present embodiment and optional configurations are therefore to be considered in all respects as exemplary and/or illustrative and not restrictive, the scope of the invention being indicated by the ap-pended claims rather than by the foregoing description, and all alternate embodiments and changes to this embodiment which come within the meaning and range of equivalency of said claims are therefore to be embraced therein.

## Claims

1. A product dispenser, comprising:
a storage hopper;
a rotatable drum having paddles on a periphery thereof located at a bottom of the storage hopper, and a drive motor connected to the rotatable drum;
a weighing/dispensing assembly located beneath the rotatable drum, the weighing/dispensing assembly includes a load cell and further includes or is connected to one or more dump doors on which product to be dispensed is adapted to accumulate, the load cell detecting a weight of the product to be dispensed as it accumulates on the one or more dump doors;
a controller configured to: a) actuate the drive motor to rotate the rotatable drum at a start of a dispensing cycle, b) receive a signal from the load cell and determine a weight of the product accumulating on the one or more dump doors, c) determine if a percentage of a product weight target preset value is reached for the product accumulating on the dump doors, d) upon the product weight target preset value being reached, starting a pulsing algorithm including sending alternating run and pause signals to the drive motor, e) determine if a target weight is reached based on the signal from the load cell of the weight of the product accumulating on the one or more dump doors, f) deactivate the drive motor upon the target weight being detected, and g) open the one or more dump doors such that accumulated product is dispensed.

2. The product dispenser of claim 1, wherein the controller is further configured to detect a total dispense time from the start of the dispensing cycle, and is further configured to signal a display if a dispense total time preset value is exceeded.

3. The product dispenser of claim 2, wherein the controller is configured to continue the pulsing algorithm including sending alternating run and pause signals to the drive motor if the target weight is not reached and the total dispense time is not exceeded.

4. The product dispenser of claim 1, further comprising a housing and a refrigeration unit for cooling an interior space of the housing, the hopper and the rotatable drum being located in the housing.

5. The product dispenser of claim 4, wherein the product dispenser is a frozen food dispenser.

6. The product dispenser of claim 1, wherein there are two of the storage hoppers, two of the rotatable drums with respective ones of the drive motors, and two of the weighing/dispensing assemblies, with one of the weighing/dispensing assemblies being located beneath each respective one of the rotatable drums, and the controller is configured to control the dispensing of product from each of the storage hoppers.

7. The product dispenser of claim 1, further comprising a receptacle sensor configured to detect a receptacle being placed into a receiving position under the one or more dump doors, the receptacle sensor signaling the controller which is configured to initiate the dispensing cycle upon the receptacle being detected.
